# EUROPEAN PATENT SPECIFICATION

(11) **EP 1 382 589 B1**
(45) Date of publication and mention of the grant of the patent: **23.08.2006**
(21) Application number: 03253716.9
(22) Date of filing: 12.06.2003
(51) Int. Cl.: C04B 35/593

(54) **Sintered silicon nitride, cutting tip, wear-resistant member, cutting tool, and method for producing sintered silicon nitride**
Gesintertes Siliziumnitrid, Schneidplättchen, abriebfester Teil, Schneidwerkzeug und Verfahren zur Herstellung von gesintertem Siliziumnitrid
Nitrure de silicium fritté, plaquette de coupe, élément résistent à l'abrasion, outil de coupe et procédé pour la fabrication de nitrure de silicium fritté

(30) Priority: 13.06.2002 JP 2002173306
(43) Date of publication of application: 21.01.2004
(73) Proprietor: NGK Spark Plug Co., Ltd., Nagoya, Aichi (JP)
(72) Inventor: Abukawa, Kohei, Mizuho-ku Nagoya, Aichi (JP); Akahori, Yasushi, Mizuho-ku Nagoya, Aichi (JP)
(74) Representative: Nicholls, Michael John

(56) References cited:
- EP-A- 0 801 042
- EP-A- 0 963 965
- US-A- 4 351 787
- US-A- 6 136 738
- US-A1- 2001 027 158
- KIRK-OTHMER: "Encyclopedia of Chemical Technology" 1981 , JOHN WILEY & SONS , NEW YORK XP002261935 Vol.15 * page 879 *

## Description

The present invention relates to sintered silicon nitride; a cutting tip; a wear-resistant member; a cutting tool; and a method for producing sintered silicon nitride. More particularly, the present invention relates to sintered silicon nitride which exhibits long life even when employed for high-speed working; a cutting tip which exhibits long life even when employed for high-speed cutting; a wear-resistant member exhibiting long life; a cutting tool which exhibits long life even when employed for high-speed cutting; and a method for producing sintered silicon nitride, which facilitates production of the aforementioned sintered silicon nitride.

Conventionally, tools having a cutting blade formed of sintered silicon nitride have been employed for preliminary working of FC material, which is ordinary cast iron. Such a tool has been employed at a relatively low cutting speed. However, in recent years, demand has arisen for increasing the cutting speed, from the viewpoint of cost reduction, and the tool has been employed within high cutting speed ranges of 500 m/minute or higher.

Japanese Patent Application Laid-Open (*kokai*) No. 2-74564 discloses sintered silicon nitride containing a specific element. The publication describes that sintered silicon nitride is suitable for use in a cutting tool.

However, the aforementioned publication does not describe cutting speed during cutting. When the present inventors performed cutting by use of a cutting tool formed of the sintered silicon nitride described in the publication at a relatively low cutting speed, no cracking occurred in a cutting blade over a long period of time. However, the present inventors found that cutting at a high cutting speed of 500 m/minute or higher leads to occurrence of cracking in the cutting blade within a short period of time.

In recent years, demand has arisen for increasing cutting speed for the sake of cost reduction, and therefore, demand has arisen for a material which does not cause chipping of a cutting tool even when the tool is employed for high-speed cutting. Japanese Patent Application Laid-Open (*kokai*) No. 5-155662 discloses sintered silicon nitride containing Al₂O₃ as one of the sintering aids (for example in the claims). The publication (No. 5-155662) describes that sintered silicon nitride containing Al₂O₃ as one of the sintering aids has improved wear resistance due to the reduction of grain size (see paragraph 0008). On the other hand, No. 5-155662 teaches that if the amount of the Al₂O₃ is more than 1 weight %, abrasion loss increases because of the temperature rise of the cutting edge in cutting because of the reduced thermal conductivity (see paragraph 0011).

Therefore, according to No. 5-155662, the amount of the Al₂O₃ as sintering aid must be in the range from 0.1 to 1 weight % for enhancement of impact resistance of the sintered silicon nitride.

An object of the present invention is to provide sintered silicon nitride which exhibits excellent thermal impact resistance, which can be formed into, for example, a cutting blade and a cutting tool, in which cracking does not readily occur even when the blade or tool is employed for high-speed cutting over a long period of time, and which can be formed into a wear-resistant member which is not readily broken even when brought into contact with other members at high speed.

Another object of the present invention is to provide a cutting tip exhibiting excellent thermal impact resistance, in which cracking does not readily occur even when the cutting tip is employed for high-speed cutting over a long period of time.

Another object of the present invention is to provide a cutting tool exhibiting excellent thermal impact resistance, in which cracking does not readily occur even when the cutting tool is employed for high-speed cutting over a long period of time.

Another object of the present invention is to provide a wear-resistant member which exhibits excellent thermal impact resistance and which does not readily undergo wear and chipping over a long period of time even when brought into contact with other members at.high speed.

Another object of the present invention is to provide a method for producing sintered silicon nitride, which facilitates production of the aforementioned excellent sintered silicon nitride.

Means for attaining the aforementioned objects are as follows.
(1) Sintered silicon nitride comprising silicon nitride substantially as a primary component and substantially no Al₂O₃, characterized by comprising at least one element selected from among an element belonging to Group 4 of the periodic table (hereinafter may be referred to simply as a "Group 4 element of the periodic table"), a rare earth element, and Mg, wherein the amount of the selected element as converted to its oxide is at least 0.5 mol% and less than 2.6 mol% on the basis of the entirety of the sintered silicon nitride, and the sintered silicon nitride has an average thermal expansion coefficient of 3.25 x 10⁻⁶/K or less from room temperature to 1000°C.
   In a preferred mode of the sintered silicon nitride, said the amount of the selected element as converted to its oxide is at least 0.5 mol% and less than 2.0 mol% on the basis of the entirety of the sintered silicon nitride.
   In a preferred mode of the sintered silicon nitride, said at least one element selected from among a Group 4 element of the periodic table, a rare earth element, and Mg is present in grain boundary phase.
   In a preferred mode of the sintered silicon nitride, the amount of the grain boundary phase is at least 5 area% and less than 16.3 area%.
   In a preferred mode of the sintered silicon nitride, the amount of the grain boundary phase is at least 5 area% and less than 13.0 area%.
   In a preferred mode of the sintered silicon nitride, the sintered silicon nitride has a relative density ratio of at least 98%.
(2) A cutting tip characterized by comprising the sintered silicon nitride.
(3) A wear-resistant member characterized by comprising the sintered silicon nitride.
(4) A cutting tool characterized by comprising the cutting tip, and a holder which supports the cutting tip.
(5) A method for producing sintered silicon nitride as described above through primary sintering and HIP sintering, characterized by comprising subjecting a raw material of sintered silicon nitride to primary sintering in a nitrogen atmosphere of at least 5 atm at a temperature in the range of from 1,850°C to 1,950°C in the presence of a setting material containing Mg in an amount of 2.0 to 18.0 mol% as converted to its oxide,

Zr in an amount of 3.0 to 7.0 mol% as converted to its oxide, and Si₃N₄ as the remainder.

Embodiments of the invention will now be described, by way of example only, with reference to the accompanying drawings in which:-
Fig. 1 is a perspective view showing a crucible, a form of a setting material, employed for producing the sintered silicon nitride of the present invention;
Fig. 2 is a perspective view showing an example of a cutting tip formed of the sintered silicon nitride of the present invention;
Fig. 3 is a plan view showing an example of a cutting tool including a holder in which a cutting tip formed of the sintered silicon nitride of the present invention is mounted;
Fig. 4 is a plan view showing a ball bearing, which is an example of a wear-resistant member formed of the sintered silicon nitride of the present invention;
Fig. 5 is a schematic representation showing an end surface of the cutting tip shown in Fig. 2; and
Fig. 6 is a partial enlarged view showing a chamfer portion of the cutting tip shown in Fig. 5.

Reference numerals are used to identify items shown in the drawings as follows:
11: crucible
12: lid
21: cutting tip
22: cutting edge
23: chamfer portion
33: bearing ball
35: ball bearing
36: outer ring
37: inner ring
40: cutting tool
41: holder
42: cutting section
43: attachment depression
44: wedge
45: cartridge

### 1. Sintered silicon nitride.

The sintered silicon nitride of the present invention contains silicon nitride substantially as a primary component, for example at least 60 wt% silicon nitride, and substantially no Al₂O₃. The "substantially no Al₂O₃"means that sintered silicon nitride of the present invention is made without using Al₂O₃. However, the sintered silicon nitride of the present invention contains silicon nitride substantially as a primary component and unavoidable Al₂O₃.

The amount of unavoidable Al₂O₃ of the sintered silicon nitride of the present invention is less than 0.1 weight %.

The sintered silicon nitride of the present invention contains silicon nitride substantially as a primary component, and contains at least one element selected from among a Group 4 element of the periodic table, a rare earth element, and Mg (hereinafter, the selected element may be referred to as "specific element"), wherein the amount of the selected element as converted to its oxide is at least 0.5 mol% and less than 2.6 mol% on the basis of the entirety of the sintered silicon nitride. As used herein, the term "periodic table" refers to Table 1-3.2 entitled "Assignment of Group in Periodic Table" described in page 43 of "Nomenclature of Inorganic Chemistry-IUPAC Recommendations 1990" edited by G. J. Leich, translated and authored by Kazuo Yamazaki, published by Tokyo Kagaku Dojin Co., Ltd. on March 26, 1993.

The sintered silicon nitride of the present invention contains silicon nitride as a primary component and substantially no Al₂O₃. When the aforementioned specific element is incorporated into the sintered silicon nitride in a specific amount in combination with the silicon nitride, the sintered silicon nitride exhibits enhanced impact resistance, and occurrence of cracking in the sintered silicon nitride is prevented.

Preferred examples of the Group 4 element; i.e., a specific element, include titanium (Ti), zirconium (Zr), and hafnium (Hf). Examples of the rare earth element include scandium (Sc), yttrium (Y), lanthanides, and actinides. Examples of the lanthanides include cerium group elements and yttrium group elements. Examples of the cerium group elements include lanthanum (La), cerium (Ce), praseodymium (Pr), neodymium (Nd), promethium (Pm), and samarium (Sm). Examples of the yttrium group elements include europium (Eu), gadolinium (Gd), terbium (Tb), dysprosium (Dy), holmium (Ho), erbium (Er), thulium (Tm), ytterbium (Yb), and lutetium (Lu). Examples of the actinides include actinium (Ac) and thorium (Th). As used herein, the expression "the amount of the element as converted to its oxide" refers to the amount of the element employed in the present invention if it were converted to its oxide through oxidation of the element.

The aforementioned specific elements may be incorporated into the sintered silicon nitride singly or in combination of two or more species.

Among the aforementioned specific elements, zirconium and hafnium; i.e., Group 4 elements, are preferred. When such a Group 4 element is incorporated into the sintered silicon nitride, the element is present in grain boundary phase together with SiO₂ (unavoidable impurity) contained in silicon nitride, to thereby densify the sintered silicon nitride. In addition, such a Group 4 element greatly contributes to enhancement of impact resistance of the sintered silicon nitride and prevention of occurrence of cracking. Of rare earth elements, scandium, yttrium, cerium, and ytterbium are preferred. Such a rare earth element has an ionic radius smaller than those of other rare earth elements. Therefore, incorporation of such a rare earth element densities the sintered silicon nitride, and the rare earth element greatly contributes to enhancement of impact resistance of the sintered silicon nitride and prevention of occurrence of crackling.

The amount of any of the aforementioned specific elements, as converted to its oxide, in the sintered silicon nitride is at least 0.5 mol% and less than 2.6 mol%, preferably at least 0.5 mol% and less than 2.0 mol%.

When the amount of the specific element is less than 0.5 mol%, the sintered silicon nitride fails to be densified, and the strength thereof is lowered, whereas when the amount of the specific element is 2.6 mol% or more, the thermal expansion coefficient of the sintered silicon nitride becomes excessively high, and thermal impact resistance thereof is lowered.

Meanwhile, in general, a sintered material has a grain boundary phase. As used herein, the term "grain boundary phase" refers to a phase which bonds silicon nitride crystal grains together. In the sintered silicon nitride of the present invention, it is preferred that the aforementioned specific elements be virtually contained in the grain boundary phase. In general, a grain boundary phase is formed of a crystalline phase and/or a glass phase. In the sintered silicon nitride of the present invention, the aforementioned specific element may be contained in a crystalline phase or a glass phase. Alternatively, the aforementioned specific element may be contained in a grain boundary phase including a crystalline phase and a glass phase.

We can confirm the aforementioned specific element in a grain boundary phase,through analysis by use of a TEM (transmission electron microscope) and an EDX (energy dispersive X-ray spectroscopy).

When the aforementioned specific element is contained in grain boundary phase, the strength of bonding between silicon nitride grains is increased, leading to attainment of the following effects: enhancement of impact resistance of the sintered silicon nitride, prevention of occurrence of cracking, and enhancement of the thermal conductivity of the sintered silicon nitride.

The sintered silicon nitride may contain Si. In the sintered silicon nitride, Si may form, together with Mg, Zr, or a rare earth element, a glass phase or a crystalline phase such as MgSiO₃, ZrSiO₄, or Yb₂Si₂O₇.

In the sintered silicon nitride of the present invention, preferably, the amount of grain boundary phase is at least 5.0 area% and less than 16.3 area%, preferably at least 5.0 area% and less than 13.0 area%. As used herein, the amount of grain boundary phase (area%) can be determined as follows. The sintered silicon nitride to be measured is cut at its center portion; the resultant cross section is subjected to mirror polishing; the thus-polished cross section is observed under an electron microscope; the resultant electron micrograph is subjected to binarization; and the resultant binary image is processed by use of image analysis software. WinROOF (product of Mitani Corporation) can be employed as image analysis software.

When the amount of the grain boundary phase is less than 5.0 area%, the strength of bonding between silicon nitride grains is predicted to be lowered, which would further bring about a reduction of the density of the sintered silicon nitride and lowering of the strength and impact resistance thereof. In contrast, when the amount of the grain boundary phase is 16.3 area% or more, the thermal expansion coefficient of the sintered silicon nitride becomes excessively high, and thermal cracking occurs. As a result, chipping may occur at the cutting edge of a cutting tip or cutting tool produced from the sintered silicon nitride.

The sintered silicon nitride of the present invention preferably has an average thermal expansion coefficient of 3.25 × 10⁻⁶/K at most, within a temperature range of room temperature to 1000°C. The symbol "K" refers to absolute temperature. The thermal expansion coefficient can be measured and determined by use of a TMA (thermal expansion measuring apparatus). The average thermal expansion coefficient is obtained by dividing the amount of expansion strain of the sintered silicon nitride under continuous heating from room temperature to 1000°C by the temperature change in K.

When the sintered silicon nitride of the present invention has an average thermal expansion coefficient falling within the above range, even if a cutting tip produced from the sintered silicon nitride or a cutting tool incorporating the cutting tip is employed for high-speed cutting at 500 m/minute or higher, thermal cracking is less likely to occur, and chipping of the cutting edge of the cutting tip or the cutting tool is considerably reduced.

The sintered silicon nitride of the present invention has a relative density ratio of at least 98%, preferably at least 99%. When the relative density ratio is less than 98%, denseness of the sintered silicon nitride is lowered, along with lowering in the mechanical strength and impact resistance thereof, and the sintered silicon nitride may fail to be suitable for use in, for example, a cutting tip. The relative density ratio can be obtained by dividing the density of the sintered silicon nitride as measured by means of the Archimedes method by the theoretical maximum density.

### 2. Production method for sintered silicon nitride.

The present invention also provides a method for producing sintered silicon nitride. The production method is suitable for the production of the sintered silicon nitride of the present invention.

A characteristic feature of the production method for sintered silicon nitride resides in that, in the presence of a setting material containing Mg in an amount of 2.0 to 18.0 mol% as converted to its oxide, Zr in an amount of 3.0 to 7.0 mol% as converted to its oxide, and Si₃N₄ as the remainder, a raw material of sintered silicon nitride (hereinafter may be referred to simply as "sintered silicon nitride raw material) is subjected to primary sintering in a nitrogen atmosphere of at least 5 atm (atm = atmospheric pressure, approx 10⁵Pa) at 1,850°C to 1,950°C; and the resultant sintered compact is subjected to HIP sintering.

No particular limitations are imposed on the sintered silicon nitride raw material, so long as the raw material contains sintered silicon nitride as a primary component. Preferably, the sintered silicon nitride raw material contains sintered silicon nitride as a primary component, and contains at least one element selected from among a Group 4 element of the periodic table, a rare earth element, and Mg (as described above, the selected element is referred to as "specific element"), wherein the amount of the selected element as converted to its oxide is at least 0.5 mol% and less than 2.6 mol%, preferably at least 0.5 mol% and less than 2.0 mol%, on the basis of the entirety of the sintered silicon nitride raw material.

In the case where the specific element is contained in the sintered silicon nitride raw material in the aforementioned specific amount, when the sintered silicon nitride raw material is subjected to primary sintering and HIP sintering, sintered silicon nitride having a dense structure with no pores and exhibiting excellent thermal resistance and thermal cracking resistance is produced. In other words, when the amount of the specific element is less than 0.5 mol%, sintered silicon nitride fails to be densified during sintering, whereas when the amount is 2.6 mol% or more, sintered silicon nitride exhibiting thermal resistance and thermal cracking resistance of interest fails to be produced. In the production method of the present invention, notably, even when the amount of the aforementioned specific element is less than 2.6 mol%, there can be produced sintered silicon nitride having no pores (i.e., having a dense structure) and exhibiting thermal resistance and thermal cracking resistance.

Preferably, the sintered silicon nitride raw material does not contain an element which readily forms a solid solution in silicon nitride grains, such as Al. Importantly, in the production of the sintered silicon nitride of the present invention, addition of a sintering aid Al₂O₃ is avoided. However, migration of a trace amount of Al₂O₃ would occur even though Al₂O₃ is not positively.added, and presence of such a level of Al₂O₃ serving as an unavoidable impurity does not raise any problem in practice.

In general, a sintering aid such as aluminum oxide enhances sinterability. However, in the production method of the present invention, employment of such a sintering aid is not preferred, since the sintering aid causes lowering of the thermal conductivity and thermal resistance of the resultant sintered silicon nitride.

A Group 4 element and a rare earth element contained in the aforementioned preferred sintered silicon nitride raw material are similar to those described above and incorporated into the sintered silicon nitride.

The aforementioned Group 4 element is contained in the sintered silicon nitride raw material in the form of an oxide of the element or in the form of a substance which can be converted into an oxide during sintering, such as a carbonate or halide of the element. Particularly preferably, the Group 4 element takes the form of zirconium oxide or hafnium oxide. This is because, zirconium oxide or hafnium oxide readily forms, during HIP sintering, a liquid phase together with unavoidable impurities present on the surface of silicon nitride grains.

The aforementioned rare earth element is also contained in the sintered silicon nitride raw material in the form of an oxide of the element or in the form of a substance which can be converted into an oxide during sintering, such as a carbonate or halide of the element. Particularly preferably, the rare earth element takes the form of, for example, yttrium oxide, scandium oxide, cerium oxide, or ytterbium oxide. Such a preferred rare earth element oxide has an ionic radius smaller than those of oxides of other rare earth elements, and a liquid phase formed by such a preferred oxide during HIP sintering exhibits low viscosity and high fluidity, thus enabling the sintered silicon nitride to be densified.

To obtain sintered silicon nitride embodying the invention, sintered silicon nitride raw material, which is obtained by mixing silicon nitride powder with a sintering aid which provides the aforementioned specific element, is press-molded and is subjected to primary sintering.

The ratio between the sintering aid and the silicon nitride powder to be mixed is appropriately determined such that the amount of the specific element in the sintered silicon nitride of the present invention falls within the aforementioned range.

Preferably, the silicon nitride powder and powder of the sintering aid that provides the specific element are weighed so as to attain a predetermined ratio, and wet-mixed together for 5 to 30 hours by use of, for example, a mixer. Subsequently, if desired, a binder is added to the resultant mixture, and the mixture is formed into granules by use of a granulation apparatus such as a spray dryer. The thus-formed granules preferably have a size of 50 to 100 µm.

A water-soluble polymer substance is preferably employed as a binder. Examples of the polymer substance include polyvinyl alcohol, polyvinyl pyrrolidone, polyacrylic acid, polyacrylamide, polyethylene oxide, polyethyleneimine, and carboxymethyl cellulose. No particular limitations are imposed on the amount of the binder to be employed, but the amount of the binder is typically 1 to 10 parts by mass, preferably 3 to 7 parts by mass, on the basis of 100 parts by mass of the aforementioned mixture.

In the production method of the present invention, the aforementioned sintered silicon nitride raw material is caused to coexist with a setting material containing Mg in an amount of 2.0 to 18.0 mol% (preferably 5.0 to 15.0 mol%) as converted to its oxide, Zr in an amount of 3.0 to 7.0 mol% (preferably 4.0 to 6.0 mol%) as converted to its oxide, and Si₃N₄ as the remainder.

When the amount of Mg contained in the setting material is less than 2.0 mol%, during primary sintering, SiO₂ in the sintered silicon nitride raw material evaporates and/or decomposition of silicon nitride proceeds, and thus the sintered silicon nitride of the present invention fails to be produced. In contrast, when the amount of Mg exceeds 18.0 mol%, Mg in the setting material migrates into sintered silicon nitride, and thus the sintered silicon nitride of the present invention, containing the specific element, fails to be produced. Similar to the case of Mg, when the amount of Zr contained in the setting material is less than 3.0 mol%, during primary sintering, SiO₂ in the sintered silicon nitride raw material evaporates and/or decomposition of silicon nitride proceeds, and thus the sintered silicon nitride of the present invention fails to be produced. In contrast, when the amount of Zr exceeds 7.0 mol%, since Zr migrates from the setting material into the sintered silicon nitride raw material, and the amount of grain boundary phase in the resultant sintered silicon nitride increases, the sintered silicon nitride does not exhibit characteristics of interest, although exhibiting high density. When the amount of Zr is excessively large, reaction between Zr and SiO2 in the sintered silicon nitride may proceed, resulting in precipitation of a crystalline phase containing an oxide or oxynitride of ZrSi. Alternatively, decomposition of silicon nitride may proceed, to thereby form pores.

The setting material containing the aforementioned specific element in a specific amount is used in various forms during primary sintering. The setting material may be used in various forms, so long as evaporation of the sintering aid and SiO2 in the sintered silicon nitride raw material is prevented during primary sintering.

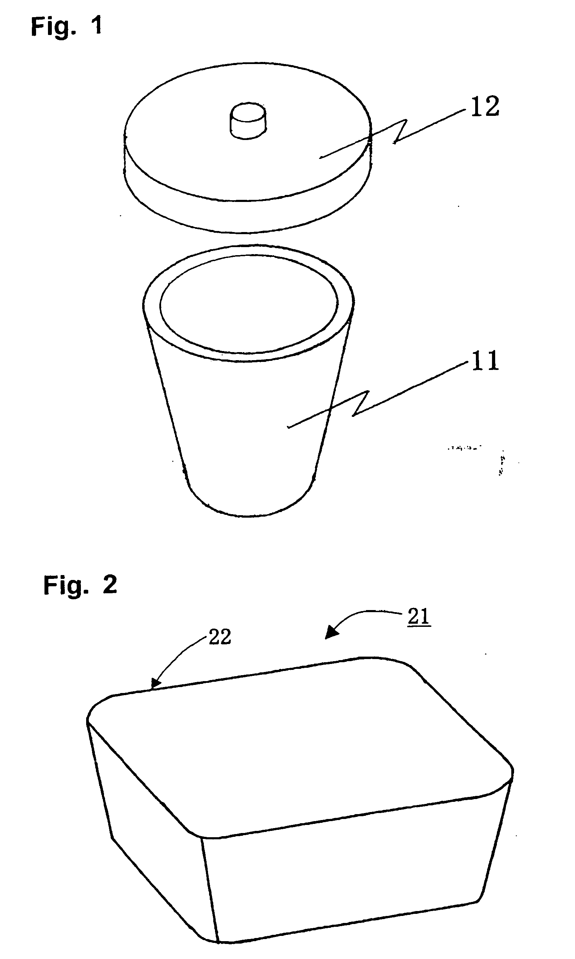

The setting material may be used to form a container for accommodating the sintered silicon nitride raw material, such as a "crucible" as shown in Fig. 1, containing the aforementioned specific element in a specific amount. In Fig. 1, reference numerals 11 and 12 denote a crucible main body and a lid, respectively. The entirety of the aforementioned container may be formed of the setting material, or the inner wall of the container; i.e., the wall with which the sintered silicon nitride raw material is brought into contact, may be coated with the setting material. Furthermore, the setting material may be used in various forms; for example, granules, pellets, agglomerates, or rod-like materials, which are caused to coexist with the sintered silicon nitride raw material accommodated in a container employed for primary sintering. In addition, the setting material may be used in a wall which surrounds the sintered silicon nitride raw material accommodated in a container employed for primary sintering, or used for lining of a sintering furnace.

The time required for primary sintering of the sintered silicon nitride raw material is typically 1.0 to 4.0 hours.

In the production method of the present invention, a primary sintered compact produced through primary sintering of the sintered silicon nitride raw material is subjected to HIP sintering.

As used herein, the term "HIP" is abbreviation of "Hot Isostatic Pressing" (see Inter Press Dictionary of Science and Engineering 350,000 terms). In the present invention, HIP sintering is characterized as secondary sintering with respect to the aforementioned primary sintering.

No particular limitations are imposed on the conditions for HIP sintering, but HIP sintering is typically performed under the following conditions: sintering atmosphere: an inert gas atmosphere (e.g., a nitrogen or argon atmosphere), sintering temperature: 1,400 to 2,000°C (preferably 1,500 to 1,700°C), sintering time: 0.5 to 4.0 hours, and sintering pressure: 500 to 1500 atm.

The above-obtained primary sintered compact is placed or charged into a predetermined die, and subjected to HIP sintering under the aforementioned sintering conditions, to thereby produce the sintered silicon nitride of the present invention.

### 3. Cutting tip

The sintered silicon nitride of the present invention or sintered silicon nitride produced through the production method of the present invention can be formed into a cutting tip.

No particular limitations are imposed on the shape and size of the cutting tip of the present invention, so long as it has a cutting edge formed by a flank and a rake farce.

Fig. 2 shows an example of the cutting tip. A cutting tip 21 shown in Fig. 2 has generally rectangular upper and lower surfaces. The cutting tip 21 has a generally frustum shape, with the upper surface being larger in size than the lower surface. In Fig. 2, reference numeral 22 denotes a cutting edge.

In accordance with its shape, the cutting tip of the present invention is employed for, for example, high-speed milling, turning, drilling, reaming, broaching, gear cutting, and shaveing.

The cutting tip of the present invention exhibits long life when employed for cutting at a cutting speed of 500 m/minute or higher. The reason why the cutting tip exhibits such long life is considered to be as follows. Since the sintered silicon nitride from which the cutting tip is formed contains the specific element in a specific amount, the sintered silicon nitride has a dense structure and contains a small amount of a grain boundary phase, and the difference in thermal expansion coefficient between silicon nitride grains and the grain boundary phase is small.

### 4. Cutting tool.

The cutting tool of the present invention includes the cutting tip of the present invention, and a holder which supports the cutting tip.

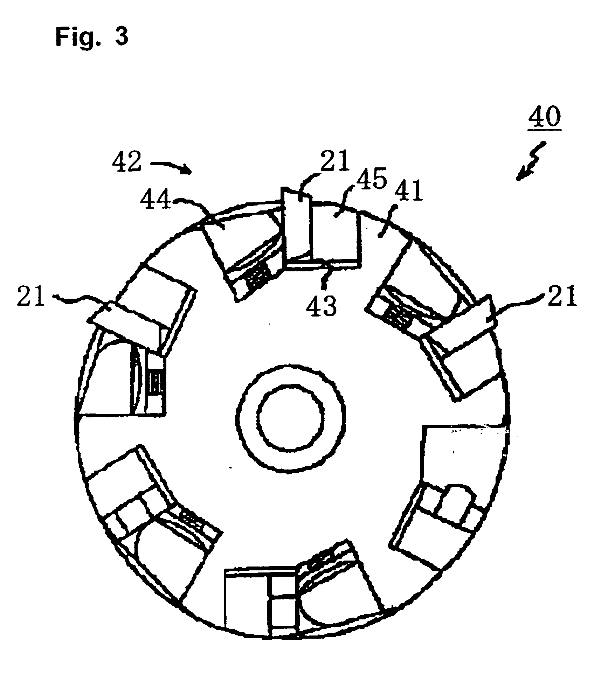

Fig. 3 shows an example of the cutting tool; i.e., a cutting tool (milling cutter) 40 including a holder 41 and cutting tips 21 which are mounted therein.

As shown in Fig. 2, the cutting tool 40 includes six cutting sections 42 provided along the periphery of the end portion (to face a surface to be machined) of the holder 41. The cutting tips 21 are provided at the cutting sections 42.

Specifically, six attachment depressions 43 are provided along the periphery of the end portion of the holder 41. In each attachment depression 43, the aforementioned cutting tip 21, an alloy-steel cartridge 45 for attaching the cutting tip 21, an alloy-steel wedge 44, etc. are provided, to thereby form the corresponding cutting section 42. For the purpose of clearly showing of the structure of the milling cutter, two of the eight cutting sections 42 do not include the cutting tip 21, and one of the cutting sections 42 has neither the cutting tip 21 nor the wedge 44.

Thus, the cutting tool (milling cutter) 40 can be produced. Since the aforementioned cutting tool includes the cutting tip formed of the sintered silicon nitride of the present invention, even when the cutting tool is employed for high-speed cutting, chipping does not readily occur at a cutting edge; i.e., the cutting tool can be employed for cutting over a long period of time.

### 5. Wear-resistant member.

The wear-resistant member of the present invention contains the sintered silicon nitride of the present invention. Examples of the wear-resistant member include members which must exhibit resistance to wear caused by friction force generated from sliding, rotation, or slipping movement. Specific examples include bearing members such as a ball bearing, a roller bearing, a thrust bearing, and a pivot bearing; a shaft which is supported by a bearing member rotatably, slidably, or reciprocatably; a piston which is mounted and reciprocates in a cylinder; a cylinder including a piston which reciprocates therein; and a spherical valve in a check valve.

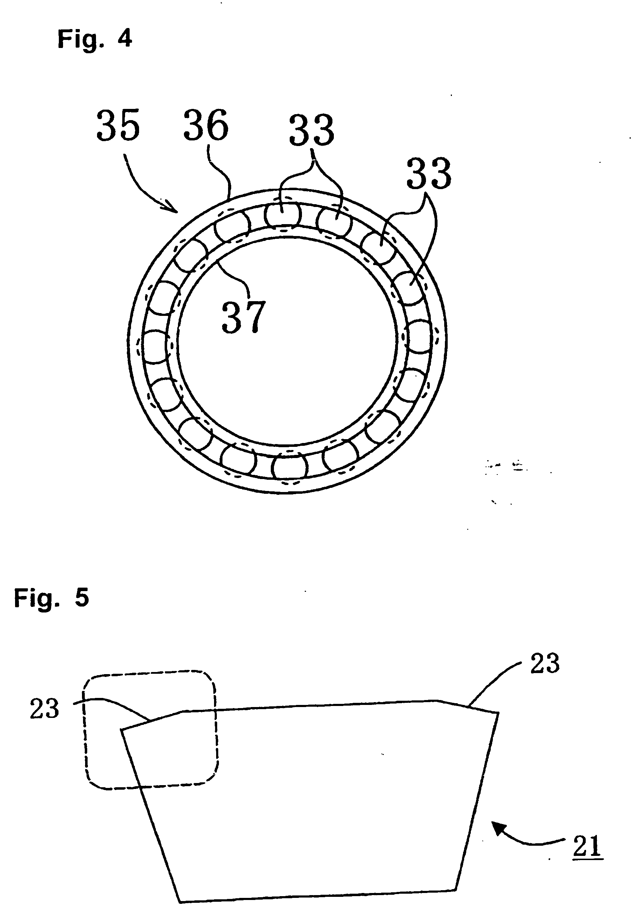

As shown in Fig. 4, a bearing 35, an example of the wear-resistant member, includes an outer ring 36, an inner ring 37, and bearing balls 33 which are rotatably or slidably held between the rings 36 and 37. Since the bearing having such a structure includes the bearing balls formed of the sintered silicon nitride of the present invention, even when the bearing is employed under the conditions such that the bearing balls are rotated at a high speed over a long period of time, chipping or fracture attributed to heat does not occur in the bearing balls. Therefore, this bearing can be employed under severe conditions and exhibits long life.

Ceramic bearing balls can be readily produced by means of methods described in, for example, Japanese Patent Application Laid-Open (*kokai*) Nos. 2000-111312, 2000-188967, 2000-221084, and 2001-035549.

Examples and Comparative Examples.

Silicon nitride (correctly α-Si₃N₄) (average particle size: 1.0 µm or less) and one or more species selected from among MgO, ZrO₂, HfO₂, CeO₂, and Yb₂O₃ (average particle size: 1.0 µm or less), serving as a sintering aid, were weighed so as to attain incorporation amounts shown in the below-described Table, and subsequently, the silicon nitride and the sintering aid were placed in a pot having as inner wall formed of Si₃N₄. A plurality of balls formed of Si₃N₄ and ethanol (solvent) were added to the pot, and mixing was performed for 24 hours, to thereby yield a slurry.

The slurry was applied to a 325-mesh sieve, and an organic binder (microwax dissolved in ethanol) (5.0 wt.%) was added to the resultant slurry. The resultant slurry containing the organic binder was spray-dried, to thereby yield granulated powder.

The granulated powder was press-molded into a compact of a shape as defined in ISO standards SNGN 120412. Thereafter, the resultant compact was placed in a heating apparatus, and degreased in a nitrogen atmosphere of 1 atm at 600°C for 60 minutes, to thereby produce a sintered silicon nitride raw material.

The sintered silicon nitride raw material containing the above components in amounts described in the Table was placed in a crucible having a composition shown in the Table, the raw material was heated to a temperature described in the Table in a heating furnace, and the raw material was maintained at the temperature at a nitrogen pressure described in the Table for 120 minutes, to thereby perform primary sintering and yield a primary sintered compact.

The primary sintered compact was subjected to secondary sintering through heating in a nitrogen atmosphere of 1,000 atm at 1,600°C for 120 minutes.

Among samples described in the Table, Samples A through K correspond to Examples, and Samples L through R and S through X correspond to Comparative Examples. In order to distinguish Examples from Comparative Examples, Samples corresponding to Comparative Examples are marked with "*".

The sintered silicon nitride densified through secondary sintering was subjected to measurement of density by means of the Archimedes method, and the thus-measured density was divided by the theoretical density, to thereby calculate a relative density ratio after HIP sintering. The results are shown in the Table. The thermal expansion coefficient of the densified sintered silicon nitride was measured in a nitrogen atmosphere. The thermal expansion coefficient was measured by use of a TMA (thermal expansion measuring apparatus).

Each of the sintered silicon nitride samples densified through secondary sintering was examined under a transmission electron microscope (TEM) equipped with an EDX (energy dispersive X-ray spectroscopy) analyzer, whereby elementary analysis of the silicon nitride grains was performed, detecting Si, O, and N. Thus, it has been confirmed that, inside the silicon nitride grains, no Group 4 elements, rare earth elements, and Mg are present in solid solution state, but that these elements are present in the grain boundary phase.

The volume of the grain boundary phase of the sintered silicon nitride was determined as follows. First, a sintered silicon nitride sample was cut into halves, and the cross sections are mirror-polished and observed through scanning electron microscopy (SEM). Metallographic photo-images were captured and processed to have a 2-value gradation. Subsequently, analysis was performed using image analysis software.

The image analysis software employed was WinROOF (Mitsuya Shoji K.K.).

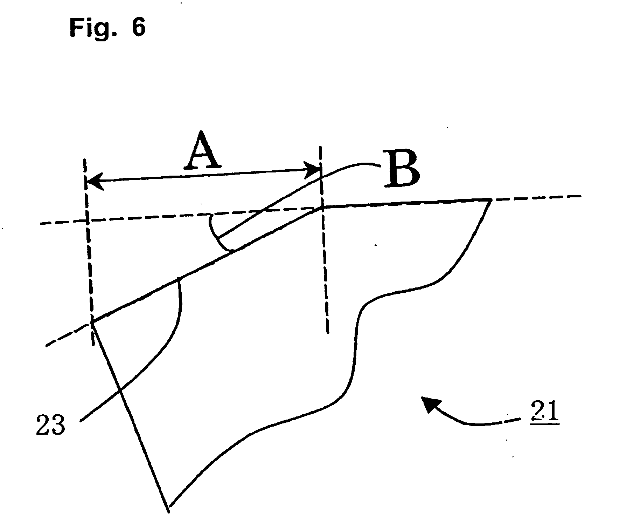

The sintered silicon nitride densified through secondary sintering was polished into a shape as defined in ISO standards SPGN 120412, to thereby yield a cutting tip. As shown in Figs. 5 and 6, the cutting edge of a cutting tip 21 was chamfered (chamfer width A: 0.1 mm, chamfer angle B: 25°), to thereby form chamfer portions 23. The cutting tip 21 having such a shape was mounted in a holder 41 as shown in Fig. 3, to thereby produce a cutting tool (milling cutter) 40.

The cutting tool was employed for cutting under the below-described cutting conditions. The number of impact repetitions at which the cutting edge of the tool chips was measured. The results are shown in the Table.
Cutting conditions
· Workpiece: JIS FC200 (1989) (ordinary cast iron)
· Cutting speed: 1,000 m/min
· Feed rate: 0.2 mm/cutting edge
· Depth of cut: 2.0 mm
· Cutting oil: water-soluble cutting fluid, WET cutting
· Cutter employed: φ 100, single cutting edge

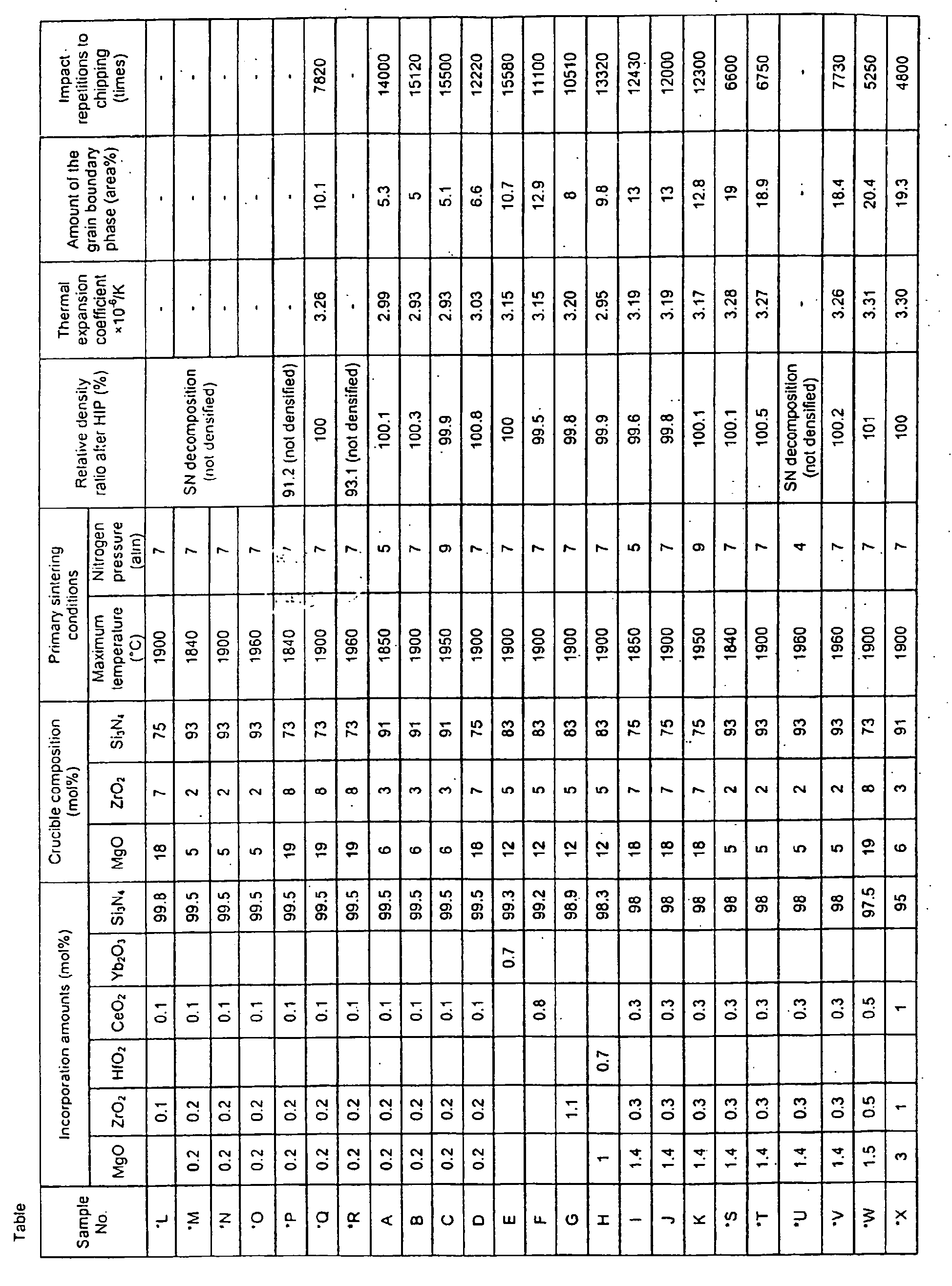

As shown in the Table, in the sintered silicon nitrides of Examples A through K, which are employed for forming cutting tips, when the amount of the sintering aid is reduced, thermal expansion coefficient is lowered, occurrence of cracking is prevented, and impact resistance and wear resistance are enhanced.

When a cutting tip is formed of each of the above sintered silicon nitrides, even if the cutting tip is employed for continuous or intermittent cutting of a workpiece which is rotated at high speed, the cutting edge of the tip does not undergo chipping caused by occurrence of cracking, and the tip exhibits considerably long life.

When the cutting tip is employed for cutting, high-speed cutting at 500 m/minute or higher can be performed over a long period of time, leading to attainment of enhancement of working efficiency and cost reduction in cutting.

### Effects of the invention:

According to the present invention, there is provided sintered silicon nitride which exhibits excellent thermal impact resistance, which can be formed into, for example, a cutting blade and a cutting tool, in which cracking does not readily occur even when the blade or tool, is employed for high-speed cutting over a long period of time, and which can be formed into a wear-resistant member which is not readily broken even when brought into contact with other members at high speed.

According to the present invention, there is provided a cutting tip exhibiting excellent thermal impact resistance, in which cracking does not readily occur even when the cutting tip is employed for high-speed cutting over a long period of time.

According to the present invention, there is provided a cutting tool exhibiting excellent thermal impact resistance, in which cracking does not readily occur even when the cutting tool is employed for high-speed cutting over a long period of time.

According to the present invention, there is provided a wear-resistant member which exhibits excellent thermal impact resistance and which does not readily undergo wear and chipping over a long period of time even when brought into contact with other members at high speed.

According to the present invention, there is provided a method for producing sintered silicon nitride, which facilitates production of the aforementioned excellent sintered silicon nitride.

## Claims

1. Sintered silicon nitride comprising silicon nitride substantially as a primary component and substantially no Al₂O₃, comprising at least one element selected from among an element belonging to Group 4 of the periodic table, a rare earth element, and Mg, wherein the total amount of the selected element or elements as converted to oxide thereof is at least 0.5 mol% and less than 2.6 mol% on the basis of the entirety of the sintered silicon nitride and the sintered silicon nitride has an average thermal expansion coefficient of 3.25 x 10⁻⁶/K or less from room temperature to 1000°C.

2. Sintered silicon nitride according to claim 1, wherein the total amount of said selected element or elements as converted to oxide thereof is at least 0.5 mol% and less than 2.0 mol% on the basis of the entirety of the sintered silicon nitride.

3. Sintered silicon nitride according to claim 1 or 2, wherein said at least one element selected from among an element belonging to Group 4 of the periodic table, a rare earth element, and Mg is present in a grain boundary phase.

4. Sintered silicon nitride according to any one of claims 1 to 3, wherein the amount of the grain boundary phase is at least 5.0 area% and less than 16.3 area%.

5. Sintered silicon nitride according to any one of claims 1 to 4, wherein the amount of the grain boundary phase is at least 5.0 area% and less than 13.0 area%.

6. Sintered silicon nitride according to any one of claims 1 to 5, which has a relative density ratio of at least 98%.

7. A cutting tip comprising sintered silicon nitride according to any one of claims 1 to 6.

8. A wear-resistant member comprising sintered silicon nitride according to any one of claims 1 to 6.

9. A cutting tool comprising a cutting tip according to claim 7, and a holder which supports the cutting tip.

10. A method for producing sintered silicon nitride according to claim 1 through primary sintering and HIP sintering, **characterized by** comprising subjecting a raw material of sintered silicon nitride to primary sintering in a nitrogen atmosphere of at least 5 atm at a temperature in the range of from 1,850 to 1,950°C in the presence of a setting material containing Mg in an amount of 2.0 to 18.0 mol% as converted to its oxide, Zr in an amount of 3.0 to 7.0 mol% as converted to its oxide, and Si₃N₄ as the remainder.

## Patentansprüche

1. Gesintertes Siliciumnitrid, Siliciumnitrid im wesentlichen als einen Hauptbestandteil und im wesentlichen kein Al₂O₃ aufweisend, das mindestens ein Element aufweist, das aus einem zur Gruppe 4 des Periodensystems gehörendenElement, einem Seltenerdelement und Mg ausgewählt ist, wobei die Gesamtmenge des ausgewählten Elements oder der ausgewählten Elemente, wie in sein Oxid (ihre Oxide) überführt, auf der Basis der Gesamtheit des gesinterten Siliciumnitrids mindestens 0,5 mol% und weniger als 2,6 mol% beträgt, und wobei das gesinterte Siliciumnitrid von Raumtemperatur bis 1000° C einen mittleren thermischen Ausdehnungskoeffizienten von 3,25 x 10⁻⁶/K oder weniger hat.

2. Gesintertes Siliciumnitrid nach Anspruch 1, bei dem die Gesamtmenge des ausgewählten Elements oder der ausgewählten Elemente, wie in sein Oxid (ihre Oxide) überführt, auf der Basis der Gesamtheit des gesinterten Siliciumnitrids mindestens 0,5 mol% und weniger als 2,0 mol% beträgt.

3. Gesintertes Siliciumnitrid nach Anspruch 1 oder 2, bei dem das mindestens eine Element, das aus einem zur Gruppe 4 des Periodensystems gehörenden Element, einem Seltenerdelement und Mg ausgewählt ist, in einer Korngrenzen-Phase vorliegt.

4. Gesintertes Siliciumnitrid nach einem der Ansprüche 1 bis 3, bei dem die Menge der Korngrenzen-Phase mindestens 5,0 Flächenprozent und weniger als 16,3 Flächenprozent beträgt.

5. Gesintertes Siliciumitrid nach einem der Ansprüche 1 bis 4, bei dem die Menge der Korngrenzen-Phase mindestens 5,0 Flächenprozent und weniger als 13,0 Flächenprozent beträgt.

6. Gesintertes Siliciumnitrid nach einem der Ansprüche 1 bis 5, das einen relativen Raumerfüllungsgrad von mindestens 98% hat.

7. Schneidplättchen aufweisend gesintertes Siliciumnitrid nach einem der Ansprüche 1 bis 6.

8. Verschleißfestes Teil aufweisend gesintertes Siliciumnitrid nach einem der Ansprüche 1 bis 6.

9. Schneidwerkzeug aufweisend ein Schneidplättchen nach Anspruch 7 und einen Halter, der das Schneidplättchen trägt.

10. Verfahren zur Herstellung von gesintertem Siliciumnitrid nach Anspruch 1 durch Vorsintern und HIP-Sintern, **dadurch gekennzeichnet, dass** es ein Unterziehen eines Rohmaterials aus gesintertem Siliciumnitrid einem Vorsintern in einer Stickstoff-Atmosphäre von mindestens 5 atm bei einer Temperatur in dem Bereich von 1.850 bis 1.950° C in Anwesenheit eines Härtungsmaterials, das Mg in einer Menge von 2,0 bis 18,0 mol%, wie in sein Oxid überführt, Zr in einer Menge von 3,0 bis 7,0 mol%, wie in sein Oxid überführt, und Si₃N₄ als den Rest enthält, aufweist.

## Revendications

1. Nitrure de silicium fritté comprenant du nitrure de silicium essentiellement en tant que composant primaire et sensiblement pas de Al₂O₃, comprenant un élément choisi parmi un élément appartenant au groupe 4 du tableau périodique, un élément des terres rares et Mg, dans lequel la quantité totale de l'élément choisi ou des éléments choisis converti(s) en oxyde de ceux-ci est au moins de 0,5 % en mole et de moins de 2,6 % en mole sur la base de la totalité du nitrure de silicium traité et le nitrure de silicium fritté possède un coefficient de dilation thermique moyen de 3,25 x 10⁻⁶/K ou moins, de la température ambiante à 1 000 °C.

2. Nitrure de silicium fritté selon la revendication 1, dans lequel la quantité totale dudit élément choisi ou desdits éléments choisis converti(s) en oxyde de ceux-ci est au moins de 0,5 % en mole et moins de 2,0 % en mole sur la base de la totalité du nitrure de silicium fritté.

3. Nitrure de silicium fritté selon la revendication 1 ou 2, dans lequel ledit au moins un élément choisi parmi un élément appartenant au groupe 4 du tableau périodique, un élément des terres rares, et le Mg sont présents dans une phase de joint de grain.

4. Nitrure de silicium fritté selon l'une quelconque des revendications 1 à 3, dans lequel la quantité de phase de joint de grain est d'au moins 5,0 % en superficie et de moins de 16,3 % en superficie.

5. Nitrure de silicium fritté selon l'une quelconque des revendications 1 à 4, dans lequel la quantité de phase de joint de grain est d'au moins 5,0 % en superficie et de moins de 13,0 % en superficie.

6. Nitrure de silicium fritté selon l'une quelconque des revendications 1 à 5, qui possède un rapport de densité relative d'au moins 98 %.

7. Tête de coupe comprenant le nitrure de silicium fritté selon l'une quelconque des revendications 1 à 6.

8. Organe résistant à l'usure comprenant le nitrure de silicium fritté selon l'une quelconque des revendications 1 à 6.

9. Outil de coupe comprenant une tête de coupe selon la revendication 7, et un support qui supporte la tête de coupe.

10. Procédé de production de nitrure de silicium fritté selon la revendication 1, au moyen d'un frittage primaire et d'un frittage par pressage isostatique à chaud, **caractérisé en ce qu'**il comprend l'étape consistant à soumettre une matière première de nitrure de silicium fritté à un frittage primaire dans une atmosphère d'azote d'au moins 5 atm à une température dans la plage de 1 850 à 1 950 °C en présence d'un matériau de solidification contenant du Mg en une quantité de 2,0 à 18,0 % en mole converti en son oxyde, du Zr en une quantité de 3,0 à 7,0 % en mole converti en son oxyde, et du Si₃N₄ pour le reste.
